(19) Europäisches Patentamt
European Patent Office
Office européen des brevets

(11) **EP 2 221 587 B1**

(12) **EUROPÄISCHE PATENTSCHRIFT**

(45) Veröffentlichungstag und Bekanntmachung des Hinweises auf die Patenterteilung:
**19.06.2019 Patentblatt 2019/25**

(51) Int Cl.:
***G01D 5/14*** *(2006.01)*      ***G01P 3/481*** *(2006.01)*

(21) Anmeldenummer: **10000431.6**

(22) Anmeldetag: **18.01.2010**

(54) **Absoluter magnetischer Positionsgeber**

Absolute magnetic positioner

Indicateur de position magnétique absolu

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **24.02.2009 DE 102009010242**
        **25.07.2009 DE 102009034744**

(43) Veröffentlichungstag der Anmeldung:
**25.08.2010 Patentblatt 2010/34**

(73) Patentinhaber: **AVAGO TECHNOLOGIES INTERNATIONAL SALES PTE. LIMITED**
**Singapur 768923 (SG)**

(72) Erfinder:
• **Mehnert, Walter**
**85521 Ottobrunn (DE)**
• **Theil, Thomas**
**82340 Feldafing (DE)**

(74) Vertreter: **Dilg, Haeusler, Schindelmann Patentanwaltsgesellschaft mbH Leonrodstraße 58 80636 München (DE)**

(56) Entgegenhaltungen:
**EP-A1- 1 847 810**     **EP-A2- 1 770 001**
**EP-A2- 2 159 547**     **DE-A1-102004 062 448**
**DE-A1-102006 017 865**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen absoluten magnetischen Positionsgeber der im Oberbegriff von Anspruch 1 genannten Art.

Ein solcher Positionsgeber umfasst einerseits einen so genannten Segmentzähler, der immer dann ein Zählsignal erzeugt, wenn der zu überwachende Körper eine oder mehrere vorgegebene Positionen durchläuft, deren Abstände als "Segmente" bzw. Segmentlängen bezeichnet werden. Vorzugsweise ist eine Bewegungsrichtungserkennung vorgesehen, sodass das Zahlsignal vorzeichenrichtig einem Zähler zugeführt werden kann (Aufwärtszählung bei einer Bewegungsrichtung, Abwärtszählung bei entgegen gesetzter Bewegungsrichtung). Der im Zähler enthaltene Segment-Zählwert stellt einen groben Positionswert für den zu überwachenden Körper dar

Andererseits ist eine Feinauflösungsanordnung vorgesehen, die dazu dient, Fein-Positionswerte zu erzeugen, welche die Segmentlängen unterteilen, aber insofern mehrdeutig sind, als sie keine Information darüber enthalten, zu welchem Segment sie gehören.

Aus der Kombination von Segment-Zählwert und Fein-Positionswert lässt sich mit Hilfe einer Verarbeitungselektronik ein eindeutiger Positions-Gesamtwert ermitteln, dessen Genauigkeit der des Fein-Positionswertes entspricht.

Ein solcher Positionsgeber wird dann als "absolut" bezeichnet, wenn er in der Lage ist, auch bei einer vollständigen Unterbrechung seiner Stromversorgung, insbesondere auch bei einer Trennung von einer eventuell vorhandenen Batterie, seine oben geschilderte Segment-Zähl- und Zählwert-Speicherfunktion weiterzuführen, sodass bei Wiederherstellung der Energieversorgung der korrekte Segmentzähler-Zählwert auch dann sofort zur Verfügung steht, wenn sich der zu überwachende Körper in der Zwischenzeit weiterbewegt hat.

Um dies für einen Drehgeber zu realisieren, bei dem der zu überwachende Körper eine sich drehende Welle ist, wird in der nicht vorveröffentlichten DE 10 2008 051 479.9 eine Sensorbaugruppe für einen Drehgeber beschrieben, der ein einstufiges Getriebe mit einem Eingangszahnrad aufweist, das zu der sich drehenden, als "Antriebswelle" bezeichneten Welle konzentrisch angeordnet und mit dieser drehfest verbunden ist. Als Magnetträger dient ein in das Eingangszahnrad eingreifendes zweites Zahnrad, auf dem zur Bildung eines Segmentzählers ein Permanentmagnet drehfest montiert ist, der eine senkrecht zur Drehachse des zweiten Zahnrades verlaufende Magnetisierungsrichtung aufweist und in dessen Feldbereich sich ein feststehendes Wiegand-Element befindet, das einen Wiegand- oder Impulsdraht und eine auf diesen aufgewickelte Induktionsspule umfasst. Letztere gibt immer dann, wenn der Permanentmagnet vorgegebene Winkelstellungen durchläuft, elektrische Impulse ab, die einer zur Verarbeitungselektronik gehörenden Zähl- und Speicheranordnung zugeführt werden, welche diese Impulse vorzeichenrichtig zählt (d.h. bei einer Drehung in einer ersten Richtung aufwärts und bei der entgegengesetzten Drehrichtung abwärts), und den jeweils erhaltenen Zählwert speichert.

Dabei wird, wie es beispielsweise aus der EP 0 658 745 A2 und der DE 102 59 223 A1 bekannt ist, ein Teil der mechanischen Bewegungsenergie der sich drehenden Antriebswelle abgezweigt und in einem von dem Permanentmagneten und dem Wiegand- bzw. Impulsdraht gebildeten magnetischen Zwischenspeicher so lange kumuliert, bis die erwähnte vorgegebene Winkelstellung erreicht ist. In dieser wird dann schlagartig die gespeicherte Energie freigesetzt, deren Menge so groß ist, dass der von der Induktionsspule erzeugte elektrische Impuls nicht nur als Zählsignal sondern auch dazu verwendet werden kann, zumindest die Teile der Verarbeitungselektronik, welche die vorzeichenrichtige Zählung des Zählimpulses und die Speicherung des neu entstandenen Segment-Zählwertes in einem nicht flüchtigen Speicher durchführen, so lange mit elektrischer Energie zu versorgen, bis sie ihre Aufgaben durchgeführt haben. Der Segment-Zählwert kann dann bei Wiederherstellung der externen Energieversorgung abgefragt werden. Somit ist sichergestellt, dass die Anzahl der während eines Ausfalls der Energieversorgung durchlaufenen Segmente einwandfrei gezählt wird.

Die Bezeichnung "Segmentzähler" weist darauf hin, dass die in der DE 10 2008 051 479.9 beschriebene Sensorbaugruppe für jede volle Umdrehung der Antriebswelle über 360° mehrere Zählimpulse abgibt, weil sich das zweite Zahnrad entsprechend der Drehzahlübersetzung m entsprechend öfter dreht. Dabei kann ein gezähltes "Segment" entweder einer Halb-, Viertel- oder Dritteldrehung usw. der Antriebswelle entsprechen.

Zur Feinauflösung der einzelnen Segmente ist gemäß der DE 10 2008 051 479.9 eine Singleturn-Anordnung vorgesehen, als deren Erreger der gleiche Permanentmagnet dienen kann, der auch für den Segmentzähler Verwendung findet. Der zugehörige Sensor kann von einer dem Permanentmagneten axial direkt gegenüberliegenden Mehrfeld-Hall-Sonde gebildet werden, die einen Fein-Positionswert mit einer Auflösung in der Größenordnung von 16 Bit liefern kann. Da es sich hierbei um einen von der Vergangenheit unabhängigen Momentan- oder Augenblickswert handelt, ist es in Zeiträumen ohne externe Energieversorgung nicht erforderlich, diesen Fein-Positionswert zu erfassen und/oder zwischenzuspeichem, da er nach Wiederherstellung der externen Energieversorgung der Hall-Element-Anordnung sofort wieder in korrekter Weise zur Verfügung steht.

Durch die in der DE 10 2008 051 479.9 beschriebene Kombination eines Singleturns mit einem Segmentzähler wird das bei Verwendung eines Übersetzungsgetriebes zunächst vorhandene Problem der Identifizierung des durch die vom Singleturn gelieferten Feinpositionswerte aufgelösten Segments (Halb-, Drittel-, Viertel-Kreises usw.) gelöst, weil die Zähl- und Auswerteelektronik mit Hilfe des vom Segmentzähler ermittelten, auf einen bekannten Startpunkt bezogenen Segment-Zählwertes immer berechnen kann, welches Segment durch den Singleturn gerade fein aufgelöst wird.

Nachteilig an dieser bekannten Anordnung ist jedoch die Verwendung eines mechanischen Getriebes, das eine gewisse Baugröße erfordert, und die Masse von wenigstens zwei Zahnrädern aufweist, die bei Drehzahländerungen beschleunigt bzw. abgebremst werden muss.

DE 10 2004 062 448 A1 offenbart einen Lenkwinkelsensor zur Bestimmung des absoluten Lenkwinkels eines Fahrzeugs in mehreren Ausführungsformen. Allgemein umfasst der Lenkwinkelsensor einen mit einer Lenkwelle oder einem Lenkrad drehgekoppelten Rotor, der eine Abtasteinheit zur Abtastung einer rotorseitigen Winkelcodierung zur Bestimmung eines relativen Drehwinkels und eine Zähleinheit zur Abtastung einer Inkrementcodierung aufweist. Die Inkrementcodierung umfasst einen Magnetabschnitt, der wenigstens ein Magnetpolpaar umfasst. Die Zähleinheit umfasst wenigstens ein ferromagnetisches Element und eine um das ferromomagnetische Element herum angeordnete Induktionsschleife, und ferner einen Zählspeicher, wobei beim Vorbeiführen des Magnetabschnitts an dem ferromagnetischen Element eine schlagartige Ummagnetisierung erfolgt, wodurch an der Induktionsschleife genügend Energie zur Aktivierung des Zählspeichers bereitgestellt wird.

In einer Ausführungsform des in DE 10 2004 062 448 A1 offenbarten Lenkwinkelsensors ist vorgesehen, dass weitere elektronische Bauteile mit der von der Induktionsschleife bereitgestellten Energie betrieben werden, so dass diese weiteren Bauteile autark von einer Fahrzeugbatterie beim Drehen des Lenkrads mit Strom versorgt werden können. Diese weiteren Bauteile können Drehrichtungssensoren zur Erkennung der Drehrichtung des Rotors, insbesondere Magnetfeldsensoren, in deren Erfassungsbereich sich der Magnetabschnitt der Inkrementcodierung bewegt.

In einer Ausführungsform des in DE 10 2004 062 448 A1 offenbarten Lenkwinkelsensors weist der Magnetabschnitt (oder multipolare Magnetring) eine Mehrzahl von Magnetabschnitten in der Form von Magnetpolsegmenten auf, die äquidistant zu einander und mit wechselnder Polarisierung an einer äußeren Mantelseite angeordnet sind. Zur Bestimmung des relativen Drehwinkels sind zwei analoge Magnetfeldsensoren vorgesehen, die zu den Magnetsegmenten phasenversetzt angeordnet sind und sinus- und kosinusförmige, zueinander phasenversetzte Ausgangssignale erzeugen, aus deren Signalverläufen der Lenkwinkel innerhalb eines bestimmten Umdrehungsabschnitts eindeutig bestimmt werden kann. Eine Elektronikanordnung zur Auswertung der Signale und zur Berechnung des absoluten Drehwinkels umfasst einen Zählspeicher, der von den Spulen aktiviert wird und Inkrementsignale erzeugt, eine Auswerteinheit zur Bestimmung des relativen Drehwinkels aus den Signalen der Magnetfeldsensoren, eine weitere Auswerteinheit, die aus den Ausgangssignalen des Zählspeichers sowie den anderen beiden Auswerteinheiten den absoluten Lenkwinkel bestimmt.

EP 1 770 001 A2 offenbart ein Lenkwinkelerfassungssystem zur Verwendung in einem Lenkantrieb eines Kraftfahrzeugs. Der Lenkantrieb umfasst einen Elektromotor, der über eine Welle auf ein Lenkrad einwirkt, und ein als Lenkwinkelerfassungssystem ausgebildetes Sensorsystem. Der Elektromotor umfasst einen Stator und einem aus mehreren Rotorpaketen bestehenden Rotor, wobei jeweils benachbarte Rotorpakete unterschiedliche magnetische Polaritäten haben. Der Rotor hat einen Seitenbereich, der als ein erster Impulsgeber dient. Durch die Rotorpakete sind Sektoren des ersten Impulsgebers vorgegeben, in denen der erste Impulsgeber entsprechend der magnetischen Polarität der Rotorpakete polarisiert ist. Auch ist ein erstes Sensorelement vorgesehen, das mit dem ersten Impulsgeber zusammenwirkt, wobei bei einer Drehung des Rotors die Sektoren an dem ersten Sensorelement vorbei laufen, wodurch das erste Sensorelement elektrische Impulse mit einer positiven oder negativen elektrischen Polarität erzeugt. Je nach Drehrichtung des Rotors wird ein elektrischer Impuls mit positiver oder negativer elektrischer Spannung erzeugt, der über eine Leitung zu einem Schaltkreis übertragen wird. Mit der Welle ist außerdem ein zweiter Impulsgeber verbunden, der aus einem ersten und einem zweiten halbkreisförmigen Sektor besteht, die unterschiedliche Polaritäten aufweisen. Ein zweites Sensorelement, das aus anisotrop magnetoresistiven dünnen NiFe-Schichten ausgestaltet ist, erfasst eine Drehstellung des zweiten Impulsgebers oder dessen Drehbewegung, wobei eine hohe Winkelauflösung von z.B. 1° bis 3° möglich ist und eine absolute Position über 180° erfasst werden kann. Diese Information gibt das zweite Sensorelement an den Schaltkreis aus.

Während in der EP 1 770 001 A2 die Drehwinkelauflösung des zweiten Sensorelements sehr fein ist, liegt die Drehwinkelauflösung des ersten Sensorelements in einer durch die Anzahl der Rotorpakete vorgegebenen Größenordnung, was bei einem Elektromotor mit sechs oder acht Rotorpaketen eine relativ grobe Auflösung ergibt. Die von dem ersten Sensorelement Impulse durchlaufen ein Hochpassfilter und einen Gleichrichter, der die Impulse mit positiver oder negativer Spannung in Impulse mit positiver Spannung umwandelt, die an einen Energiespeicher ausgegeben werden, der einen entsprechend dimensionierten Kondensator aufweist und die Energie von einem Impuls speichern kann und zur Glättung der durch den elektrischen Impuls vermittelten, pulsförmigen Ausgangsspannung des Gleichrichters dient. Der Energiespeicher ist mit dem Versorgungsspannungseingang einer Zähleinheit und ferner mit dem Versorgungsspannungseingang eines Speicherelements verbunden. Von einer Energie eines ausgegebenen elektrischen Impulses wird so ein Teil abgezweigt, der zur elektrischen Versorgung der Zähleinheit und des Speicherelements verwendet wird.

DE 10 2006 017 865 A1 offenbart eine Vorrichtung zur Messung der absoluten Position eines Messobjekts, das rotativ oder linear bewegt sein kann, wobei die Vorrichtung eine Maßverkörperung umfasst, die eine absolute Codierung aufweist, die durch einen Sensorkopf abgetastet wird, und die zur absoluten Positionsmessung dient. In einer weiterentwickelten Ausführungsform umfasst die Maßverkörperung eine Codespur mit der feinsten Teilung und nur einige wenige weitere Codespuren, etwa lediglich eine zweite Codespur. Die Abtasteinheit umfasst dementsprechend auch nur einige wenige Sensoren, etwa nur zwei Sensoren zum Abtasten der beiden Codespuren. Mit diesen Codespuren und der entsprechenden Abtasteinheit wird ein absoluter Positionswert nur innerhalb eines Teilbereichs ermittelt. In aufeinanderfolgenden Teilbereichen wiederholen sich die absoluten Positionswerte der Codespuren zyklisch. Jedem dieser Teilabschnitte ist eine permanentmagnetische Markierung zugeordnet, die jeweils aus einem an der Maßverkörperung angebrachten Permanentmagneten bestehen, die als magnetische Dipole ausgebildet und jeweils an einem Übergang von einem Teilbereich zum anschließenden Teilbereich angeordnet sind. Die permanentmagnetischen Markierungen werden durch einen gesonderten Sensor abgetastet, der wenigstens einen Impulsdraht (Wiegand-Draht) aufweist, welcher parallel zu dem Dipol der permanentmagnetischen Markierung ist.

Bewegen sich in der DE 10 2006 017 865 A1 der Sensor und die Maßverkörperung relativ zueinander in Längsrichtung, so bewegen sich die permanentmagnetischen Markierungen und der Impulsdraht des Sensors aneinander vorbei, wodurch in dem Impulsdraht ein Ummagnetisierungsimpuls erzeugt wird, dessen Polarität davon abhängt, ob sich die Markierung und der Impulsdraht von rechts nach links oder von links nach rechts aneinander vorbei bewegen. Die in dem Impulsdraht erzeugten Impulse werden einem Zähler gezählt, der die Impulse je nach Durchlaufrichtung der Markierung aufwärts oder abwärts zählt. Von einem anfänglichen Referenzwert ausgehend gibt der Zählerstand des Zählers somit denjenigen Teilbereich an, an welchem sich die Abtasteinheit befindet, so dass sich aus dem Zählerwert und der von der Abtasteinheit ausgelesenen Absolut-Code-Wert ein absoluter Positionswert über die gesamte Länge der Maßverkörperung ergibt. Der Zähler weist einen nichtflüchtigen Speicher auf, so dass der jeweilige Zählerstand auch bei einem Ausfall der Stromversorgung oder einem Abschalten der Vorrichtung erhalten bleibt. Die Energie der Ummagnetisierungsimpulse des Impulsdrahts wird gespeichert, so dass bei einem Ausfall der Stromversorgung bzw. einem Abschalten der Vorrichtung eine Mindestenergie zur Verfügung steht, um den Zähler und den Speicher zu betreiben. Dadurch werden auch Zählimpulse erfasst, wenn der Impulsdraht und die Maßverkörperung bei abgeschalteter Stromversorgung gegeneinander bewegt werden.

EP 1 847 810 A1 offenbart ein Verfahren, die relative Position zweier Gegenstände zu bestimmen, beispielsweise eines Kolbens und eines Zylinders. Dabei ist auf dem ersten Gegenstand ein magnetisches Element angeordnet, das ein Magnetfeld erzeugt, und auf dem zweiten Gegenstand befindet sich eine Sensoranordnung, die zwei Messgrößen bestimmt, welche mit der Größe des Magnetfelds in zwei unterschiedlichen Raumrichtungen korreliert. Dabei können alle Elemente der Sensoranordnung nahe aneinander und insbesondere auf einem Chip angeordnet sein.

Gegenüber dem Stand der Technik liegt der Erfindung die Aufgabe zugrunde, einen Positionsgeber zu schaffen, der sowohl als Lineargeber als auch als Drehgeber ausgestaltet werden kann, der mit einem Minimum an mechanisch beweglichen Bauteilen auskommt und der dabei alle Möglichkeiten und Vorteile aufweist, die auch die in der DE 10 2008 051 479.9 beschriebene Kombination aus Singleturn und Segmentzähler besitzt.

Zur Lösung dieser Aufgabe sieht die Erfindung die im Anspruch 1 zusammengefassten Merkmale vor.

Unter der im Folgenden verwendeten Bezeichnung "magnetosensitive Sensorelemente" werden sowohl Hall-Elemente als auch magnetoresistive Sensorelemente, insbesondere GMR-Sensorelemente oder aber auch Feldplatten und dergleichen verstanden. Wenn umgekehrt in der Beschreibung die Verwendung von "Hall-Elementen" erwähnt wird, ist dies nicht einschränkend zu verstehen, und der Fachmann weis dass in entsprechender Weise auch alle anderen Arten von magnetosensitiven Sensorelementen eingesetzt werden können.

Dadurch, dass der Magnetträger unmittelbar mit dem zu überwachenden Körper so verbunden ist, dass er dessen Bewegung in identischer Weise folgt bzw. abbildet, wird die Verwendung einer Getriebeanordnung vermieden. Durch den Einsatz von wenigstens zwei magnetosensitiven Sensorelementen, die in einem Abstand positioniert sind, der sich wahlweise parallel oder quer, insbesondere senkrecht zur Bewegungsrichtung des Magnetträgers erstreckt, können mit Hilfe der von den magnetosensitiven Sensorelementen gelieferten Signale Magnetpolsegmente fein aufgelöst werden, von denen sich jedes ausgehend von einem Magnetpol einer ersten Polarität, beispielsweise einem Süd-Pol, bis zum nächsten Magnetpol der anderen Polarität (Nord-Pol) erstreckt, wobei allerdings die Unbestimmtheit verbleibt, dass die Signale der magnetosensitiven Sensorelemente keine Information darüber enthalten, um welches Magnetpolsegment es sich handelt.

Diese Information liefert die Elektronikanordnung durch den im nichtflüchtigen Speicher enthaltenen Zählwert der von dem Wiegand-Element abgegebenen Impulse. Diese enthalten unabhängig von der Geschwindigkeit, mit der sich der Magnetträger bzw. der zu überwachende Körper bewegt, genügend Energie, um auch dann, wenn keine ausreichende Frerndversorgung (auch nicht durch eine Batterie oder dergleichen) vorhanden ist, nicht nur die Zähl- und Speicherteile der Elektronikanordnung mit einer für deren Funktionieren ausreichenden elektrischen Energie, sondern auch wenigstens eines der magnetosensitiven Sensorelemente mit einem getakteten minimalen Ladungsstrom zu versorgen, der zwar keine Feinauflösung wohl aber eine Bewegungsrichtungserkennung ermöglicht, sodass eine vorzeichenrichtige Zählung erfolgen kann.

Steht dann die Fremdenergie wieder zur Verfügung, werden die beiden magnetosensitiven Sensorelemente mit dem für eine vollwertige Feinauflösung erforderlichen Strom versorgt, der wesentlich höher als der eben erwähnte Minimalstrom ist, sodass aus den Signalen der magnetosensitiven Sensorelemente und dem Zählwert der Elektronikanordnung die momentane Position des zu überwachenden Körpers mit hoher Genauigkeit bestimmt werden kann.

Vorteilhaft ist, dass die Zähleinrichtung der Elektronikanordnung ohne großen Aufwand mit einer praktisch unbegrenzten Zählkapazität ausgestattet werden kann, sodass eine Zählung und Feinauflösung und damit eine sehr genaue Positionsbestimmung über große Bewegungsweiten, z.B. bei einem sich drehenden Körper über viele Umdrehungen hinweg möglich ist.

Bekannte Inkrementgeber können nur solange korrekte Positionswerte erzeugen, solange eine Fremdversorgung mit elektrischer Energie, beispielsweise durch eine Batterie gewährleistet ist. Nach einer Unterbrechung dieser Versorgung müssen sie auf eine bekannte Ausgangsposition zurückgefahren werden, damit sie wieder einwandfrei arbeiten können.

Im Gegensatz hierzu besteht eine weitere wichtige Eigenschaft eines erfindungsgemäßen Positionsgebers darin, dass er ein Absolutgeber ist, der auch bei fehlender Fremdversorgung korrekt weiterarbeitet, sodass bei wieder anliegender Versorgung der richtige Positionswert auch dann sofort abgegeben wird, wenn sich der zu überwachende Körper während des Versorgungsausfalls in der einen oder anderen Richtung bewegt hat. Das bei Inkrementalgebern erforderliche Zurückfahren auf eine bekannte Position, das in vielen Anwendungsfällen nicht möglich ist, kann hier somit entfallen.

Da somit durch die Erfindung ein Positionsgeber geschaffen wird, bei dem unter Beibehaltung aller vorteilhaften Eigenschaften der in der DE 10 2008 051 479.9 beschriebenen Anordnung das dortige mechanische Getriebe durch rein magnetisch/elektronische Komponenten ersetzt wird, kann man hier auch von einem "elektronischen Getriebe" sprechen.

Bei einer bevorzugten Ausführungsform kann ein drittes magnetosensitives Sensorelement vorgesehen sein, dessen Stromversorgung in getakteter Weise ausschließlich durch von dem Wiegand-Element erzeugte elektrische Energie erfolgt und dessen Signal nur zur Richtungserkennung dient, während die Signale der beiden anderen magnetosensitiven Sensorelemente in den Zeiträumen, in denen ausreichend externe elektrische Energie zur Verfügung steht, zur Feinauflösung verwendet werden.

Die wenigstens zwei zur Feinauflösung dienenden magnetosensitiven Sensorelemente müssen so angeordnet werden, dass sie zu jedem Zeitpunkt Magnetfelder verschiedener Bereiche nutzen können und jedes der von ihnen abgegebenen Signale bei einer ausreichend weiten Bewegung des Magnetträgers einen periodischen und stetigen Verlauf aufweist und eindeutig ist. Hierunter wird im vorliegenden Zusammenhang verstanden, dass jedem Positionswert nur ein einziger Amplitudenwert zugeordnet ist. Die Signale, die diese Eigenschaften besitzen und um einen durch die Wahl der gegenseitigen räumlichen Lage der Sensorelemente vorgebbaren Phasenwinkel gegeneinander versetzt sind, werden im Folgenden kurz als "Sensorsignale" bezeichnet. Sie ermöglichen es, durch ihre gemeinsame Auswertung innerhalb eines jeden Segments einen eindeutigen Feinpositionswert zu erhalten. Es ist nicht erforderlich, dass sie sinusförmig sind.

Eine zu solchen Sensorsignalen führende Möglichkeit der Positionierung von wenigstens zwei der magnetosensitiven Sensorelemente besteht darin, sie mit einem gegenseitigen Abstand anzuordnen, der sich in Bewegungsrichtung erstreckt und etwa gleich einer Hälfte einer Magnetsegment-Länge ist. In diesem Fall durchläuft dann die Amplitude eines der beiden Signale in etwa ihr Maximum während die des anderen ihr Minimum durchläuft und umgekehrt. Diese Lösung ist bei Sensoren interessant, an deren Genauigkeit keine besonders hohen Anforderungen gestellt werden.

Für eine hohe Genauigkeit ist die erfindungsgemäße Lösung vorteilhaft, bei der die Abstände der Sensorelemente in Bewegungsrichtung gegen Null gehen bzw. praktisch gleich Null sind. Die wenigstens zwei magnetosensitiven Sensorelemente werden dann mit einem zur Bewegungsrichtung des Magnetträgers senkrechten, bei einem Drehgeber also radial zur Drehachse verlaufenden Abstand angeordnet, wobei im Allgemeinen die empfindlichen Flächen der beiden Sensorelemente zueinander senkrecht stehen. Diese Variante bringt den wichtigen Vorteil, dass sich die beiden magnetosensitiven Sensorelemente ständig in Feldbereichen derselben Permanentmagnete befinden, sodass auch durch Temperaturänderungen bewirkten Schwankungen der magnetischen Feldstärken bei der Ermittlung des Feinpositionswertes eliminiert werden können.

Eine weitere Möglichkeit besteht darin, beispielsweise vier magnetosensitive Sensorelemente, die paarweise gegeneinander geschaltet sind, mit ihren empfindlichen Flächen in einer von den Magnetisierungsachsen der Permanentmagnete und dem Bewegungsvektor aufgespannten, durch den Schwerpunkt der Permanentmagnete verlaufenden Ebene, d.h. bei einem Drehgeber in einer der betreffenden Radialebene, so anzuordnen, dass sich die Verbindungslinien eines jeden Paares rechtwinkelig überkreuzen, wobei die eine dieser Verbindungslinien parallel zur Bewegungsrichtung, bei einem Drehgeber also tangential verläuft. Hier ist eine Magnetfeldumlenkung durch ein ferromagnetischen Scheibchen erforderlich, wie dies beispielsweise von Hallsonden bekannt ist, die von der Firma Melexis unter den Bezeichnungen MLX 90316 (mit Digitalausgang) oder 2 SA-10 (mit Analogausgang) angeboten werden.

Diese und weitere vorteilhafte Ausgestaltungen eines erfindungsgemäßen Positionsgebers sind in den Unteransprüchen niedergelegt.

Die Erfindung wird im Folgenden anhand von Ausführungsbeispielen unter Bezugnahme auf die Zeichnung beschrieben; in dieser zeigen

Fig. 1      eine stark schematisierte perspektivische Ansicht der wesentlichsten Funktions- teile eines als Drehgeber aufgebauten, erfindungsgemäßen Positionsgebers mit einem aus einem magnetisierbaren Material bestehenden Magnetträger, in welchem die Permanentmagneten unmittelbar ausgebildet sind,

Fig. 2      eine der Fig. 1 entsprechende Ansicht der wesentlichsten Funktionsteile eines als Drehgeber aufgebauten, erfindungsgemäßen Positionsgebers mit einem Magnetträger, der aus einem nicht magnetisierbaren Material besteht, in welches eine Vielzahl von Permanentmagneten eingebettet ist,

Fig. 3      eine stark schematisierte perspektivische Ansicht der wesentlichsten Funktionsteile eines als Lineargeber aufgebauten, erfindungsgemäßen Positionsgebers mit einem Magnetträger, der aus einem nicht magnetisierbaren Material besteht, in das eine Vielzahl von Permanentmagneten eingebettet ist,

Fig. 4      eine der Fig. 1 entsprechende Darstellung der wesentlichsten Funktionsteile einer weiteren Ausführungsform eines als Drehgeber aufgebauten, erfindungsgemäßen Positionsgebers mit in einer durch die Rotationsachse verlaufenden Axialebene angeordneten magnetosensitiven Sensorelementen, deren Abstand in Bewegungsrichtung praktisch gleich Null ist, und einer zusätzlichen Gruppe von Permanentmagneten, welche eine Erkennung der Drehrichtung des Magnetträgers ermöglichende Signale liefern,

Fig. 5      eine der Fig. 1 entsprechende Darstellung der wesentlichsten Funktionsteile einer dritten Ausführungsform eines als Drehgeber aufgebauten, erfindungsgemäßen Positionsgebers der magnetoresistive Sensorelemente umfasst, die in einer einzigen, zur Rotationsachse senkrechten, d.h. einer Radialebene angeordnet sind,

Fig. 6      eine schematische Draufsicht auf die wesentlichsten Funktionsteile einer vierten Ausführungsform eines als Drehgeber aufgebauten, erfindungsgemäßen Positionsgebers,

Fig. 7      einen schematischen Schnitt durch einen dem Drehgeber aus Fig. 6 ähnlichen erfindungsgemäßen Drehgeber, und

Fig. 8      ein vereinfachtes Blockdiagramm einer Elektronik für den Empfang, die Verarbeitung und Weiterleitung der vom Wiegand-Element und der Anordnung der magnetosensitiven Sensorelemente abgegebenen Signale.

In allen Zeichnungsfiguren sind gleiche oder einander äquivalente Teile mit den gleichen Bezugszeichen versehen.

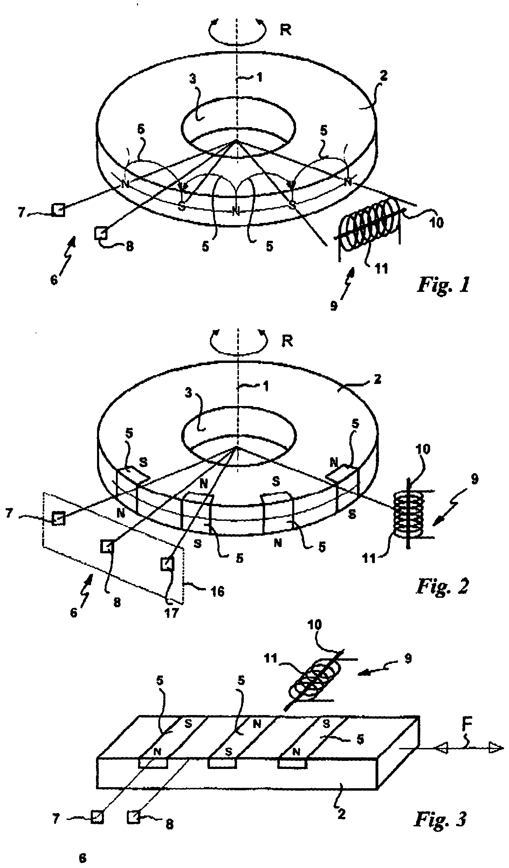

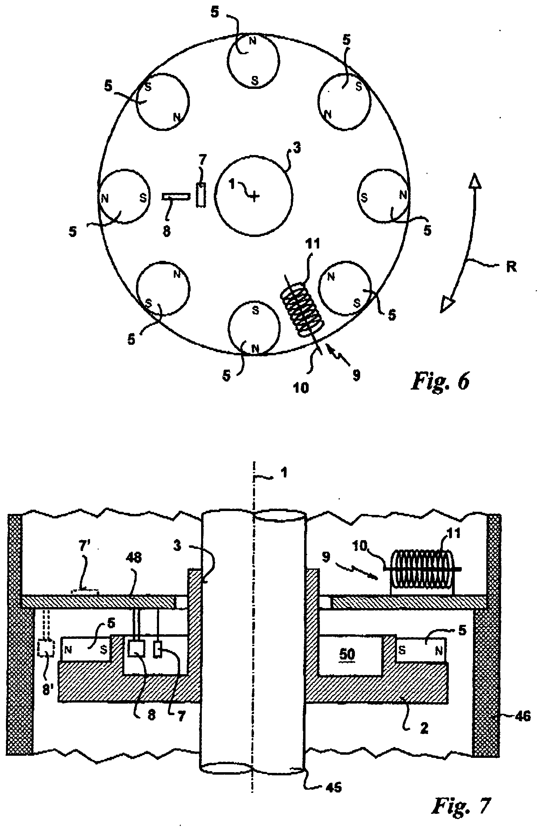

In den Fig. 1 und 2 ist jeweils der Körper, dessen Bewegung messend erfasst werden soll, eine hier nur durch ihre Rotationsachse 1 angedeutete, nur in Fig. 7 dargestellte Welle 45, die sich sowohl im Uhrzeigersinn als auch in entgegengesetzter Richtung drehen kann, wie dies durch den Doppelpfeil R angedeutet ist. Ein Magnetträger 2, der die Form einer Kreisringscheibe besitzt, ist konzentrisch zur Welle 45 angeordnet und mit dieser drehfest verbunden, so dass er ihre Drehbewegung abbildet, d.h. sich mit ihr mit identischer Winkelgeschwindigkeit mitdreht. Zu diesem Zweck besitzt der Magnetträger 2 eine durchgehende, zentrale Bohrung 3, die zur Aufnahme der zu überwachenden Welle 45 dient, die in der Bohrung 3 nach dem Einschieben fixiert wird. Somit ist dieser Magnetträger 2 für eine Hohlwellenanordnung geeignet.

Im Falle der Fig. 1 wird der Magnetträger 2 von einer Scheibe gebildet, die entweder vollständig aus einem magnetisierbaren Material besteht, oder auf deren Umfangsbereich ein magnetisierbares Material, beispielsweise in Form eines Magnetbandes aufgebracht ist. Wesentlich ist, dass eine Vielzahl von Permanentmagneten 5 so ausgebildet ist, dass ihre Polrichtungen tangential zur Rotationsachse 1 der Welle 45 verlaufen. Dabei ist die Anordnung dieser Permanentmagnete 5 so getroffen, dass auf der äußeren Umfangsoberfläche der den Magnetträger 2 bildenden Kreisringscheibe abwechselnd magnetische Nord- und Südpole N bzw. S erscheinen von denen jeder mit jedem seiner Nachbarn jeweils ein Magnetpolpaar bildet von denen jedes einem Magnetsegment entspricht. Die Magnetsegmente, d.h. die Abstände der einander benachbarten Magnetpole in Umfangsrichtung sind (im Rahmen der Herstellungstoleranzen) gleich groß und bilden jeweils einen n-ten Teil von $2\pi$ wenn man annimmt, dass der Magnetträger 2 insgesamt n Magnetpole aufweist. Anders ausgedrückt: Bezeichnet man den Winkel, den zwei durch benachbarte Magnetpole verlaufende Radialstrahlen miteinander einschließen, mit $\varphi$, dann gilt

$$n \hat{\phi} = 2\pi$$

Mit geringem radialem Abstand vom Magnetträger 2 sind in dessen Umfangsbereich eine aus wenigstens zwei magnetosensitiven Sensorelementen, insbesondere. Hall-Elementen 7, 8 bestehende Sensoranordnung 6 und ein Wiegand-Element 9 jeweils feststehend angeordnet. Dabei ist in Drehrichtung des Magnetträgers 2 der Abstand der beiden Hall-Elemente 7, 8 gleich dem halben Magnetpolabstand bzw. einem halben Magnetsegment, so dass dann, wenn man das von dem einen der beiden Hall-Elemente 7, 8 erzeugte Signal in grober Näherung als Sinus-Signal betrachtet, das andere als entsprechendes Kosinus-Signal angesehen werden kann; jedes dieser beiden Sensorsignale besitzt über zwei Magnetsegmente hinweg eine Periodenlänge von $2\,\phi$.

Eine volle Umdrehung der Welle 45 über $2\,\pi$ wird durch die beschriebene Anordnung also n mal fein aufgelöst, was der Wirkung eines mechanischen Getriebes entspricht, bei dem die Welle mit einem großen Zahnrad verbunden ist, das ein sich n mal schneller drehendes kleineres Zahnrad antreibt, das seinerseits einen Permanentmagneten trägt, dessen Feld eine feststehende 4-Quadranten-Hallsonde durchsetzt, wie dies in der DE 10 2008 051 479.9 beschrieben ist. Man kann also die erfindungsgemäße Anordnung als "elektronisches Getriebe" auffassen, da sie ein mechanisches Getriebe ersetzt.

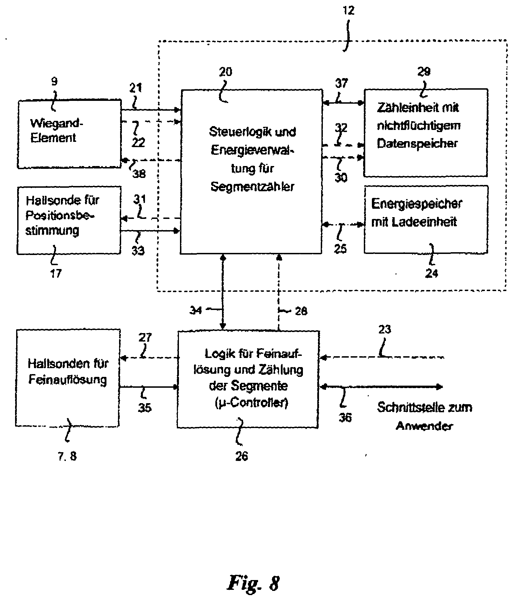

Das Wiegand-Element 9, das beispielsweise aus einem Wiegand- oder einem Impulsdraht 10 mit aufgewickelter Induktionsspule 11 bestehen kann, ist tangential zum Magnetträger 2 ausgerichtet und dient dazu, die durch die Verwendung von n Magnetpolen entstehende Unbestimmtheit des momentan erzeugten Feinpositionswertes zu beseitigen, da es beim Vorbeilaufen mindestens eines jeden zweiten Magnetpols ein Zählsignal abgibt. Zur Richtungserkennung wird dabei das Signal eines der beiden Hall-Elemente 7, 8 herangezogen, wie dies prinzipiell aus dem Stand der Technik bekannt ist. Somit kann in der zugehörigen, genauer in Fig. 8 dargestellten Elektronikanordnung 12 ein fortlaufender Segment-Zählwert gebildet werden, wobei je nach Drehrichtung der Welle 45 der neue Impuls des Wiegand-Elementes 9 entweder zu dem vorhandenen Zählwert hinzugezählt oder von diesem abgezogen wird. Je voller Umdrehung der Welle 45 über $2\,\pi$ fallen im Regelfall n solcher Zählwerte an, die als solche bereits eine grobe "Feinauflösung" dieser Volldrehung darstellen, die dann durch die zusätzliche Feinauflösung durch die Signale der Hall-Elemente 7, 8 zur hochfeinen Auflösung wird.

Da es kein Problem darstellt, den elektronischen Zähler zum Erfassen der vom Wiegand-Element 9 abgegebenen Impulse mit einer beliebig großen Zählkapazität auszustatten, kann auch eine Umdrehungszählung der Welle 45 über eine unbegrenzte Anzahl von Volldrehungen hinweg erfolgen, sodass hier ein echter absoluter Multitum vorliegt.

Der Energiegehalt der vom Wiegand-Element 9 abgegebenen Impulse ist in erster Näherung unabhängig von der Geschwindigkeit des sich vorbei bewegenden Magnetträgers 2, hier also unabhängig von der Drehgeschwindigkeit, und immer ausreichend, um diese Impulse nicht nur zu zählen, sondern auch einen erheblichen Teil der in ihnen enthaltenen Energie in einen Energiespeicher 24 (siehe Fig. 8) einzuspeisen, der dann, wenn keine elektrische Fremdversorgung vorhanden ist, zumindest einem der Hall-Elemente 7, 8 in getakteter Weise einen für die Richtungserkennung ausreichenden minimalen Ladungsstrom sowie der zur vorzeichenrichtigen Zählung und Abspeicherung des neu erhaltenen Segment-Zählwerts dienenden Zähleinheit 29 mit nicht flüchtigem Datenspeicher (Fig. 8) ausreichend elektrische Energie liefert, um deren Funktionen zu gewährleisten.

Das in Fig. 2 gezeigte Ausführungsbeispiel unterscheidet sich von dem aus Fig. 1 zunächst dadurch, dass der Magnetträger 2 aus einem nicht magnetisierbaren Material, beispielsweise Kunststoff, Messing, Aluminium oder dergleichen besteht, in das stabförmige Permanentmagnete 5 beispielsweise durch Umspritzen so eingebettet sind, dass sich ihre Polrichtungen parallel zur Rotationsachse 1 der Welle 45 erstrecken und an der oberen bzw. unteren Stimfläche 14, 15 des kreisscheibenförmigen Magnettragers 2 alternierend jeweils magnetische Nord- und Südpole N und S erscheinen, die sich in unmittelbarer Nähe der Umfangsfläche 3 befinden. Das im Zusammenhang mit dem Ausführungsbeispiel nach Fig. 1 hinsichtlich der Polabstände und deren Längen Gesagte trifft hier in gleicher Weise zu.

Dies gilt im Prinzip auch für die Funktionsweise der gesamten Anordnung, da hier ebenfalls zwei Hall-Elemente 7, 8 und ein Wiegandelement 9 im Bereich der Magnetfelder der Permanentmagnete 5 angeordnet sind. Während die Hall-Elemente 7, 8 auch bei diesem Beispiel einen sich bezüglich des Magnetträgers 2 in tangentialer Richtung erstreckenden Abstand gleich dem halben Abstand zwischen einander benachbarten Magnetpolen besitzt, ist der Wiegand- bzw. Impulsdraht 10 des Wiegand-Elementes 9 parallel zur Rotationsachse 1 ausgerichtet.

Die Sensoranordnung 6, die auch als integrierter Chip ausgebildet sein kann, wie dies durch die gestrichelte Linie 16 angedeutet ist, umfasst hier ein zusätzliches, beispielsweise ebenfalls von einem Hall-Element 17 gebildetes magnetosensitives Sensorelement, das hier der Drehrichtungserkennung dient, während die beiden anderen Hall-Elemente 7, 8 ausschließlich für die Feinauflösung der Magnetsegmente dienen. In diesem Fall wird das zusätzliche Hall-Element 17 immer in getakteter Weise mit elektrischer Energie versorgt, die aus Zählimpulsen des Wiegand-Elementes 9 stammt. Die zeitlichen Längen der Stromimpulse, die dem Hall-Element 17 zugeführt werden, können sehr klein sein, d.h. von gerade so vielen elektrische Ladungen gebildet werden, dass eine einwandfreie Erfassung des hierdurch erzeugten Hall-Elementsignals möglich ist. Die getaktete Ansteuerung des Hall-Elements 17 erfolgt sowohl dann, wenn eine Fremdenergieversorgung vorhanden, als auch dann, wenn sie ausgefallen ist.

Werden klassische Hall-Elemente 7, 8 und 17 verwendet, so werden diese so angeordnet, dass die Normalen ihrer magnetfeldempfindlichen Flächen parallel zu den Magnetfeldlinien verlaufen, die diese Flächen somit senkrecht durchsetzen. Bei der Verwendung von Hall-Sonden mit Magnetfeld-Umlenkstrukturen, die, wie erwähnt, beispielsweise von der Firma Melexis angeboten werden, können die magnetfeldempfindlichen Flächen auch so angeordnet werden, dass ihre Normalen senkrecht zu den außerhalb der Umlenkstrukturen verlaufenden Magnetfeldlinien stehen.

Wenn beide Sensorsignale mit einer 4-Quadranten-Hallsonde gewonnen werden sollen, die mit einer Feldlinien-Umlenkstruktur kombiniert ist, müssen die magnetfeldempfindlichen Flächen in der durch die Magnetisierungsachsen der Permanentmagnete 5 und die Bewegungsrichtung definierten Fläche, beim Beispiel der Fig. 2 also auf einer zur Rotationsachse 1 konzentrischen Zylinderfläche liegen, wobei die Verbindungslinie des einen Paars von gegeneinander geschalteten magnetfeldempfindlichen Flächen in Bewegungsrichtung weist und die des anderen Paares hierzu senkrecht steht.

Die Funktion der Feinauflösung der Magnetsegmente wird weiterhin von den Hall-Elementen 7, 8 erfüllt, die in den Zeiträumen. in denen eine Fremdenergieversorgung vorhanden ist, permanent mit einem Strom versorgt werden, der eine den Anforderungen entsprechend genaue Feinauflösung ermöglicht.

Die hier beschriebene Verwendung von drei Hall-Elementen 7, 8 und 17 kann in gleicher Weise auch bei dem Ausführungsbeispiel gemäß Fig. 1 erfolgen. Auch dann, wenn, wie dort gezeigt, nur zwei Hall-Elemente 7 und 8 vorhanden sind, können diese auf einem einzigen integrierten Chip vorgesehen sein.

In Fig. 3 ist ein kubischer Magnetträger 2 dargestellt, der sich gemeinsam mit einem nicht gezeigten, zu überwachenden Körper, bei dem es sich beispielsweise um einen Maschinenschlitten handeln kann, in Richtung des Doppelpfeils F über eine vorgegebene Hubweite hin und her bewegen kann. Dieser Magnetträger 2 besteht wieder aus einem nicht magnetisierbaren Material, z.B. Kunststoff, in das eine Vielzahl von Permanentmagneten 5 beispielsweise durch Umspritzen so eingebettet ist, dass sie an der in Fig. 3 oben befindlichen Flachseite des Magnetträgers frei liegen und sich in etwa senkrecht zur Bewegungsrichtung F erstrecken. Zwar sind in Fig. 3 nur drei Permanentmagnete 5 dargestellt, doch können je nach Bedarf auch wesentlich mehr solcher Permanentmagnete vorhanden und ebenfalls so angeordnet sein, dass Nord- und Südpole einander in Bewegungsrichtung F abwechseln.

Seitlich neben dem Magnetträger 2 sind im Bereich der Magnetfelder der Permanentmagnete 5 wieder zwei Hall-Elemente 7, 8 mit einem sich in Bewegungsrichtung F erstreckenden Abstand angeordnet, der gleich einem halben Magnetsegment ist. Auch hier kann ein drittes Hall-Element vorgesehen werden, wie dies unter Bezugnahme auf Fig. 2 erläutert wurde. Prinzipiell ist es auch möglich, die Hall-Elemente oberhalb der oberen Oberfläche des Magnetträgers 2 anzuordnen. Das oben bezüglich der Ausrichtung der Normalen der magnetfeldempfindlichen Flächen von Hall-Elementen Gesagte gilt entsprechend. Auch hier ist es möglich, eine 4-Qudranten-Hallsonde mit ferromagnetischen Magnetfeld-Umlenkscheibchen in der Bewegungsebene anzuordnen, die durch die Schwerpunkte der Permanentmagnete 5 verläuft.

Ein Wiegand-Element 9, das wiederum aus einem Wiegand- oder einem Impulsdraht 10 mit aufgewickelter Induktionsspule 11 besteht, erstreckt sich hier knapp über der oberen Flachseite des Magnetträgers 2 in etwa senkrecht zur Bewegungsrichtung F so, dass es im Normalfall bei einem bewegungsbedingten Vorbeilaufen eines jeden Permanentmagneten 5 einen Zählimpuls abgibt, der in der gleichen Weise sowohl zur Positionsbestimmung als auch zur Energieversorgung zumindest eines Teils der in Fig. 8 dargestellten Elektronikanordnung 12 und eines der Hall-Elemente 7, 8 oder 17 verwendet werden kann, wie dies oben beschrieben wurde.

Das Wiegand-Element ist so anzuordnen, dass das jeweils getaktete Hall-Element im "Sichtfeld" eines Magneten liegt, wenn das Wiegand-Element ausgelöst wird. Normalerweise sind das 30° wenn die Segmentlänge 180° beträgt.

Die jeweilige Position des Magnetträgers 2 und damit auch des nicht dargestellten, mit ihm fest verbundenen, zu überwachenden Körpers wird somit zu jedem Zeitpunkt, in dem die volle externe Energieversorgung gewährleistet ist, durch die die jeweiligen Magnetsegmente fein auflösenden Hall-Element-Signale und den das betreffende Magnetsegment kennzeichnenden Zählwert, der sich aus der vorzeichenrichtigen Zählung (aufwärts oder abwärts je nach Bewegungsrichtung) der Impulse des Wiegand-Elementes 9 ergibt, in eindeutiger Weise dargestellt. Bei fehlender Fremdversorgung mit elektrischer Energie läuft die Zählung der Magnetsegmente wie oben für die Drehgeber beschrieben auch hier weiter, und bei Wiederanlegen dieser Energieversorgung stehen auch die Feinauflösungssignale sofort wieder zu Verfügung.

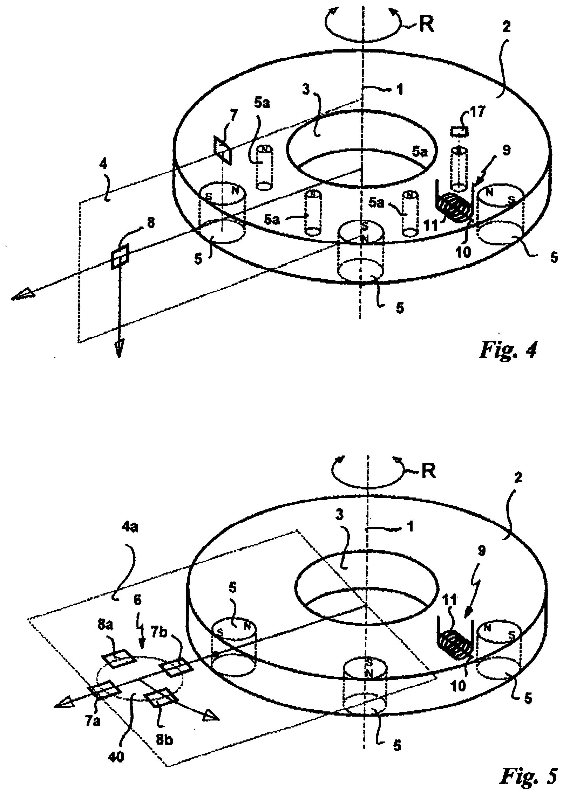

Der in Fig. 4 gezeigte Magnetträger 2 weist eine Vielzahl von zylindrischen, diametral magnetisierten Permanentmagneten 5 auf, die in gleichen Winkelabständen um seinen Umfang herum so angeordnet sind, dass ihre Magnetachsen, d.h. die Verbindungslinien ihrer jeweiligen Nord- und Südpole radial verlaufen, wobei bei benachbarten Permanentmagneten 5 alternierend immer ein Südpol, dann ein Nordpol und dann wieder ein Südpol usw. außen liegt. Von diesen Permanentmagneten sind in Fig. 4 der Einfachheit halber nur drei wiedergegeben, obwohl bei den gezeigten Winkelabständen tatsächlich acht solcher Permanentmagnete vorhanden sind. Oberhalb der Bewegungsbahn dieser Permanentmagnete 5 ist ein Wiegand-Element 9 so positioniert, dass der Wiegand-Draht radial zur Rotationsachse 1 verläuft. Wie bei den vorausgehend beschriebenen Ausführungsbeispielen erzeugt das Wiegand-Element 9 zumindest beim Durchlaufen einer vorgebbaren Position durch mindestens jeden zweiten Permanentmagneten 5 ein Zähl- und Stromversorgungssignal.

Um zu erkennen, in welcher Richtung sich der Magnetträger 2 dreht, d.h., ob ein aktuell erzeugtes Zählsignal zu einen vorhandenen Zählwert addiert oder von ihm subtrahiert werden soll, umfasst der Magnetträger 2 hier eine der Anzahl der Permanentmagneten 5 entsprechende Anzahl von stabförmigen Hilfs-Permanentmagneten 5a, die auf einem kleineren Radius als die Permanentmagnete 5 mit gleichen Winkelanständen verteilt so angeordnet sind, dass sich ihre Magnetachsen parallel zur Rotationsachse 1 erstrecken und altemierend auf jeden oben liegenden Südpol ein oben liegender Nordpol folgt und umgekehrt. Über der oberen Flachseite des ringscheibenförmigen Magnetträgers 2 befindet sich ein feststehendes magnetosensitives Sensorelement 17, beispielsweise ein Hall-Element in einer solchen Winkelposition bezüglich des Wiegand-Elementes 9, dass es rechtzeitig dann, wenn dieses einen Zähl- und Energieimpuls erzeugt, je nach der Polarität des unter ihm hindurch laufenden Hilfs-Permanentmagneten 5a ein Signal erzeugt, das je nach seinen Vorzeichen eine Addition oder Subtraktion des neuen Zählimpulses zum bzw. vom vorhandenen Zählwert bewirkt. Somit wird also die korrekte Zählfunktion durch diese Hilfs-Permanentmagnete 5a ermöglicht.

Demgegenüber erfolgt die Feinauflösung der einzelnen Segmente mit Hilfe der von den Permanentmagneten 5 gebildeten Magnetpolpaare und der Hall-Elemente 7 und 8, die hier so angeordnet sind, dass die Flächenschwerpunkte ihrer empfindlichen Oberflächen in einer Axialebene 4 liegen, die durch die Rotationsachse 1 geht. Somit ist der Abstand dieser beiden Sensorelemente in Bewegungsrichtung praktisch gleich Null. Die Hallsonde 7 befindet sich über der Bewegungsbahn der Permanentmagnete 5 und ist so angeordnet, dass die Normale ihrer empfindlichen Fläche in radialer Richtung verläuft. Sie erfasst also im Wesentlichen die einzelnen sich jeweils zwischen Nord- und Südpol ein und desselben Permanentmagneten 5 erstreckenden Magnetfelder und liefert ein Signal mit maximaler Amplitude gerade dann, wenn einer dieser Permanentmagnete 5 unter ihr hindurch läuft, wobei das Vorzeichen dieses Signals durch die Orientierung des betreffenden Permanentmagneten 5 gegeben ist. Wenn zwei einander benachbarte Permanentmagnete 5 in etwa die gleiche Magnetstärke besitzen, dann heben sich ihre Felder in etwa in der Mitte zwischen ihnen auf, sodass hier das Ausgangssignal der Hallsonde 7 einen Nulldurchgang zeigt. Durch die äquidistante Anordnung der Permanentmagnete 5 entsteht somit ein periodisches Signal, das im Idealfall sinusförmig ist.

Demgegenüber befindet sich die Hallsonde 8 in der Mitte der axialen Höhen der Permanentmagnete 5 radial außerhalb der Umfangsfläche des Magnetträgers 2 und ist so ausgerichtet, dass sich die Normale ihrer empfindlichen Fläche tangential zur Drehrichtung R, d.h. senkrecht zu Ebene 4 erstreckt. Sie erfasst die sich zwischen den Permanentmagneten 5 in Umfangsrichtung erstreckenden Magnetfelder und ihr Ausgangssignal besitzt in etwa in der Mitte zwischen zwei benachbarten Permanentmagneten 5 eine maximale Amplitude, deren Vorzeichen wieder von der Polarität des betreffenden Permanentmagnetpaares abhängt. Liegt einer der Permanentmagnete 5 mit seiner Magnetachse auf dem gleichen Radius wie die empfindliche Fläche der Hallsonde 8, so zeigt deren Ausgangssignal einen Nulldurchgang. Dieses Ausgangssignal ist also ebenfall periodisch und nur im (in der Praxis nicht auftretenden) Idealfall sinusförmig, weist aber gegen das Ausgangssignal der Hallsonde 7 eine Phasenverschiebung auf, sodass sich ein eindeutiger, das betreffende Segment auflösender Feinpositionswert ermitteln lässt. Ein Vorteil dieser Ausführungsform besteht darin, dass beide Hall-Elemente zu jedem Zeitpunkt die Magnetfeldbereiche derselben Permanentmagnete erfassen, sodass bei entsprechender Signalverarbeitung temperaturbedingte Schwankungen der Magnetfeldstärke in die Ermittelung des Fein-Positionswertes nicht eingehen.

Bei der in Fig. 5 gezeigten Ausführungsform sind die Permanentmagneten 5 des Magnetträgers 2 und das Wiegand-Element 9 in der gleichen Weise angeordnet, wie bei dem Beispiel der Fig. 4. Die Hilfs-Permanentmagnete 5a werden hier nicht benötigt, weil die Sensoranordnung 6 in Zusammenarbeit mit den Permanentmagneten 5 die Funktion der Erzeugung eines die Drehrichtung kennzeichnenden Signals mit übernimmt, wie dies bereits in Verbindung mit dem Beispiel aus Fig. 1 beschrieben wurde.

Die Sensoranordnung 6 umfasst hier vier Hall-Elemente 7a, 7b und 8a, 8b, die paarweise gegeneinander geschaltet sind und deren empfindliche Flächen alle in ein und derselben Radialebene 4a liegen, die hier auf halber axialer Höhe der Permanentmagnete 5 parallel zu den oben bzw. unten liegenden Stimflächen des Magnetträgers 2 verläuft. Die Hall-Elemente eines jeden Paares 7a und 7b bzw. 8a und 8b weisen einen gegenseitigen Abstand auf, und die (gedachten) Verbindungslinien ihrer Flächenschwerpunkte stehen aufeinander senkrecht, wobei sich die Verbindungslinie des Paares 7a, 7b in radialer Richtung zur Rotationsachse 1 und die Verbindungslinie des Paares 8a, 8b in tangentialer Richtung erstreckt. Jedes der vier Hall-Elemente 7a, 7b und 8a, 8b wird teilweise von einem ferromagnetischen Feld-Umlenkplättchen 40 überdeckt. Auch hier werden bei einer Bewegung des Magnetträgers 2 periodische, gegeneinander phasenverschobene Sensorsignale erzeugt, die eine eindeutige Fein-Positionswertbestimmung ermöglichen. Weil sich die vier Hall-Elemente 7a, 7b und 8a, 8b vorzugsweise als sehr kleine Sensoranordnung auf einem gemeinsamen Chip befinden, kann hier davon gesprochen werden, dass ihre Abstände sowohl in Bewegungsrichtung als auch senkrecht hierzu praktisch gleich Null sind.

In Fig. 6 ist eine Draufsicht auf einen Magnetträger 2 dargestellt, der, was die Permanentmagnete 5 anbelangt genau so aufgebaut ist, wie der Magnetträger 2 aus Fig. 4. Die Hilfs-Permanentmagnete 5a sind hier nicht erforderlich, weil das Drehrichtungs-Erkennungssignal wieder von einem der beiden Hall-Elemente 7 oder 8 in Zusammenarbeit mit den Permanentmagneten 5 erzeugt wird.

Das Wiegand-Element 9 befindet sich auch hier oberhalb der Bewegungsbahn der Permanentmagnete 5.

Ein weiterer Unterschied zum Beispiel aus Fig. 4 besteht darin, dass sich das Hall-Element 8 zwar auf der gleichen Axialfläche wie das Hall-Element 7 aber nicht außerhalb sondern innerhalb des von den Permanentmagneten 5 gebildeten Kreises befindet und beide Hall-Elemente 7, 8 auf dem gleichen Radialstrahl angeordnet sind. Die Ausrichtung der empfindlichen Flächen der Hall-Elemente 7, 8 und ihre Funktion ist die gleiche, wie sie unter Bezugnahme auf Fig. 4 beschreiben wurde.

Die Schnittdarstellung der Fig. 7 zeigt einen erfindungsgemäßen Drehgeber, mit einem feststehenden, im Wesentlichen zylindrischen Gehäuse 46, durch das sich die zu überwachende Welle 45 hindurch erstreckt. Auf diese ist ein Magnetträger 2 der in Fig. 6 gezeigten Art aufgeschoben, der mit der Welle 45 zumindest drehfest verbunden ist. Von seinen acht Permanentmagneten 5 sind in Fig. 7 zwei einander diametral gegenüber liegende zu sehen, deren Nordpole radial nach außen und deren Südpole radial nach innen weisen, währen die Pole ihrer in Fig. 7 nicht zu sehenden Nachbarmagnete genau entgegengesetzt gerichtet sind. (Siehe aber Fig. 6!)

Oberhalb der Magnetträgers 2 erstreckt sich quer durch das Gehäuse 46 eine an diesem befestigte Platine 48, die auf ihrer oberen Seite das Wiegand-Element 9 und, diesem diametral gegenüber auf ihrer Unterseite die beiden Hall-Elemente 7 und 8 trägt, die sich beide innerhalb der von den Permanentmagneten 5 durchlaufenen Kreisbahn auf der gleichen axialen Höhe wie die Schwerpunkte der Permanentmagnete 5 befinden. Um dies zu ermöglichen, ist in der oberen Oberfläche des Magnetträgers 2 eine kreisringförmige, axiale Vertiefung 50 ausgebildet. Die aktiven Flächen der beiden Hall-Elemente 7 und 8 stehen im rechten Winkel zueinander.

Die mit gestrichelten Linien eingezeichneten Hall-Elemente 7' und 8' sind nicht gleichzeitig mit den Hall-Elementen 7 und 8 vorhanden sondern zeigen lediglich alternative Positionierungsmöglichkeiten. Dabei ist zu beachten, dass das Hall-Element 7' wieder mit einer Magnetfeld-Umlenkstruktur ausgestattet sein muss, um in der dargestellten Position mit seiner nach unten weisenden empfindlichen Fläche funktionieren zu können.

Die in Fig. 8 dargestellte Elektronikanordnung 12, die bei dem gezeigten Ausführungsbeispiel um einen Energiespeicher 24 mit Ladeeinheit ergänzt ist, ist für eine Verwendung mit einer Messanordnung geeignet, wie sie in den Fig. 2 und 4 gezeigt ist. d.h. sie umfasst drei Hall-Elemente 7, 8 und 17. Von den durch Pfeillinien dargestellten Leitungen, die in Fig. 8 die verschiedenen Blöcke miteinander verbinden, dienen die mit durchgezogenen Strichen wiedergegebenen der reinen Signalbzw. Informationsübertragung, die gestrichelten der Fremdenergieversorgung und die strich-punktierten der Eigenenergieversorgung.

Die Impulse, welche das Wiegand-Element 9 an die zentrale Steuerlogik und Energieverwaltung 20 überträgt, enthalten sowohl einen Informationsanteil (Leitung 21) als auch einen Energieanteil (Leitung 22), der über die Steuerlogik und Energieverwaltung 20 auf der Leitung 25 an einen bei dieser Ausführungsvariante vorhandenen, beispielsweise als Kondensator ausgebildeten Energiespeicher 24 weitergegeben und dort mit Hilfe einer Ladeeinheit gespeichert wird.

Die über die Leitung 23 zugeführte Fremdenergie dient im Normalbetrieb nicht nur der Energieversorgung der Logik 26 für Feinauflösung und Zählung der Signale ($\mu$-Controller) sondern auch der Hall-Elemente 7, 8 für die Feinauflösung (Leitung 27), der Steuerlogik und Energieverwaltung 20 (Leitung 28) und der Zähleinheit 29 mit nichtflüchtigem Speicher (Leitung 30), während das Hall-Element 17 für die Positionsbestimmung auch bei Anliegen der Fremdenergie nicht mit dieser sondern mit der vom Wiegand-Element 9 stammenden, über die Steuerlogik 20 auf den Leitungen 25 und 31 aus dem Energiespeicher 24 zugeführten Energie versorgt wird (Leitung 31).

Fällt die Fremdenergieversorgung aus, so werden sowohl ein Teil der Steuerlogik und Energieverwaltung 20 (Leitung 25) als auch die Zähleinheit 29 aus dem Energiespeicher 24 (Leitung 32) mit vom Wiegand-Element 9 stammender Energie versorgt, um ihre einwandfreies Funktionieren sicherzustellen.

Ein gesonderter Energiespeicher wird dann nicht benötigt, wenn alle für eine Zählung und Speicherung erforderlichen Vorgänge innerhalb der zeitlichen Dauer eines jeden der vom Wiegand-Element gelieferten Energieimpulse ablaufen können.

Wie bereits erwähnt, liefert das Wiegand-Element 9 seine Signalimpulse über die Leitung 21, während das Hall-Element 17 sein Positionsbestimmungssignal über die Leitung 33 an die Steuerlogik und Energieverwaltung 20 überträgt. Letztere steht über die bidirektionale Leitung 34 mit der Logik 26 für Feinauflösung und Zählung der Signale in Datenaustausch, der über die Leitung 35 das Feinauflösungssignal der Hall-Elemente 7, 8 erhält und über die bidirektionale Leitung 36 mit dem Anwender bzw. Verwender der vom Positionsdetektor gelieferten Daten kommuniziert. Der Datenaustausch zwischen der Steuerlogik und Energieverwaltung 20 und der Zählereinheit 29 erfolgt über die bidirektionale Leitung 37.

Die Leitung 38 dient dazu, bei Inbetriebnahme der Anordnung mit Hilfe der externen Energie das Wiegand-Element 9 zur Synchronisation des Segmentzählers mit der Feinauflösung bestromen zu können, ohne auf einen durch eine Bewegung des Magnetträgers 2 ausgelösten Impuls angewiesen zu sein..

Es sei darauf hingewiesen, dass jedes der gewöhnlichen, ohne Magnetfeld-Umlenkplättchen dargestellten Hall-Elemente auch mit einer solchen Umlenkstruktur verwendet werden kann, wodurch sich die Orientierung der aktiven, d.h. magnetfeldempfindlichen Fläche um 90° ändert. Gegebenenfalls ändert sich dadurch auch der Einbauort der Hall-Elemente. In gleicher Weise können auch die gezeigten Umlenkstrukturen weggelassen werden, wenn eine entsprechende Orientierungsanpassung erfolgt.

**Patentansprüche**

1. Absoluter magnetischer Positionsgeber zur Messung von Linear- oder Drehbewegungen eines Körpers, wobei der Positionsgeber folgendes umfasst:

    - einen Magnetträger (2), der mit dem Körper fest verbunden ist und mehrere von Permanentmagneten (5) gebildete Magnetpolpaare aufweist, die in Bewegungsrichtung angeordnet sind und deren alternierend aufeinander folgende Nord- und Südpole Magnetsegmente bilden, durch deren Zählung und Auflösung die Position des Körpers bestimmt wird,
    - eine feststehende Sensorelementanordnung (6), die zur Feinauflösung der Magnetsegmente und zur Erkennung der Bewegungsrichtung des Magnetträgers (2) wenigstens zwei magnetosensitive Sensorelemente (7, 8) umfasst, die verschiedene Magnetfeldbereiche nutzen und von denen wenigstens eines zumindest zeitweise mit einem geringen Mindeststrom versorgbar ist,
    - ein feststehend angeordnetes Wiegand-Element (9), das zumindest durch jedes zweite Magnetpolpaar zur Abgabe eines elektrischen Impulses ausgelöst wird,
    - eine Elektronikanordnung (12) die eine Steuerlogik- und Energieverwaltungsschaltung (20), und eine Zähleinheit (29) mit einem nichtflüchtigen Speicher umfasst und die elektrischen Impulse des Wiegand-Elementes (9) unter Berücksichtigung eines von der Sensorelementanordnung (6) gelieferten, die Bewegungsrichtung des Magnetträgers (2) kennzeichnenden Signals zu einem im nichtflüchtige Speicher gespeicherten Zählwert addiert oder von diesem subtrahiert, und
    - eine Logikschaltung (26), die mit der Elektronikanordnung (12) in Datenaustausch steht und aus dem erhaltenen Zählwert unter Berücksichtigung der von der Sensorelementanordnung (6) gelieferten Signale die momentane absolute Position des Körpers berechnet,
    - wobei ein wesentlicher Teil der elektrische Energie, die in den von dem Wiegand-Element (9) abgegebenen Impulsen enthalten ist, zumindest in solchen Zeiträumen, in denen eine externe Stromversorgung fehlt, zur Stromversorgung der Elektronikanordnung (12) und zur Versorgung des wenigstens einen magnetosensitiven Sensors (7, 8, 17) mit dem geringen Mindeststrom dient, sodass die Impulse des Wiegand-Elements (9) auch in diesem Betriebszustand gezählt und verarbeitet werden können,

    **dadurch gekennzeichnet, dass**

    - der Abstand in Bewegungsrichtung zwischen wenigstens zwei der zur Feinauflösung der Segmente dienenden magnetosensitiven Sensorelemente (7, 8) praktisch gleich Null ist.

2. Positionsgeber nach Anspruch 1, **dadurch gekennzeichnet, dass** die Elektronikanordnung (12) einen Energiespeicher (24) mit Ladeeinheit umfasst, der durch die vom Wiegend-Element (9) abgegebenen Impulse aufladbar ist.

3. Positionsgeber nach einem der vorhergehenden Ansprüche, **dadurch gekennzeichnet, dass** die wenigstens zwei zur Feinauflösung der Segmente dienenden magnetosensitiven Sensorelemente (7, 8) senkrecht zur Bewegungsrichtung einen Abstand aufweisen.

4. Positionsgeber nach einem der Ansprüche 1 bis 3, **gekennzeichnet durch** eine 4-Quadranten-Hallsonde, bei der jedes Paar von gegeneinander geschalteten, magnetfeldempfindlichen Flächen (7a, 7b; 8a, 8b) einen Abstand aufweist, wobei der Abstand des einen Paars (7a, 7b) in Bewegungsrichtung gleich Null ist, und wobei der Abstand des anderen Paares (8a, 8b) senkrecht zur Bewegungsrichtung gleich Null ist.

5. Positionsgeber nach einem der Ansprüche 1 bis 4, **dadurch gekennzeichnet, dass** sich jeweils die von zwei zusammengehörigen, unterschiedlichen Magnetpolen gebildeten Magnetpolpaare parallel zur Bewegungsrichtung erstrecken.

6. Positionsgeber nach einem der Ansprüche 1 bis 4, **dadurch gekennzeichnet, dass** sich jeweils die von zwei zusammengehörigen, unterschiedlichen Magnetpolen gebildeten Magnetpolpaare senkrecht zur Bewegungsrichtung erstrecken,

**7.** Positionsgeber nach einem der Ansprüche 1 bis 6, **dadurch gekennzeichnet, dass** sich das Wiegand-Element (9) in Richtung der Magnetpolpaare erstreckt.

**8.** Positionsgeber nach einem der Ansprüche 1 bis 7, **dadurch gekennzeichnet, dass** jedes der Magnetpolpaare durch einen diametral magnetisierten, scheibenförmigen Permanentmagneten (5) realisiert ist.

**9.** Positionsgeber nach einem der Ansprüche 1 bis 7, **dadurch gekennzeichnet, dass** jedes der Magnetpolpaare durch einen axial magnetisierten, stabförmigen Permanentmagneten (5) realisiert ist.

**Claims**

**1.** Absolute magnetic position encoder for the measurement of linear or rotary motions of a body, wherein the position encoder includes the following:

- a magnet carrier (2) which is fixedly connected to the body and has several magnetic pole pairs which are formed by permanent magnets (5) and which are arranged in the direction of motion and whose alternately successive North and South poles form magnet segments, by the counting and resolution of which the position of the body is determined,
- a stationary sensor element arrangement (6) which for fine resolution of the magnet segments and for recognition of the direction of motion of the magnet carrier (2) includes at least two magnetosensitive sensor elements (7, 8) which use various magnetic field regions and of which at least one can be supplied at least at times with a low minimum current,
- a stationarily arranged Wiegand element (9) which is triggered at least by each second magnetic pole pair for the delivery of an electrical pulse,
- an electronic arrangement (12) which includes a control logic and energy management circuit (20) and a counting unit (29) with a non-volatile storage and which having regard to a signal delivered by the sensor element arrangement (6) and characterizing the direction of motion of the magnet carrier (2), adds the electrical pulses of the Wiegand element (9) to a count value stored in the non-volatile storage or subtracts them therefrom, and
- a logic circuit (26) which is in data exchange relationship with the electronic arrangement (12) and which from the acquired count value and having regard to the signals delivered by the sensor element arrangement (6) calculates the instantaneous absolute position of the body,
- wherein a substantial part of the electrical power which is contained in the pulses delivered by the Wiegand element (9) serves at least in those periods of time in which an external power supply is absent for the power supply for the electronic arrangement (12) and for supplying the at least one magnetosensitive sensor (7, 8, 17) with the low minimum current so that the pulses of the Wiegand element (9) can also be counted and processed in that operating condition,

**characterised in that**

- the spacing of the at least two magnetosensitive sensor elements (7, 8) serving for fine resolution of the segments in the direction of motion is equal to zero.

**2.** Position encoder according to claim 1, **characterized in that** the electronic arrangement (12) includes an energy storage (24) with charging unit, which is recharable by the pulses delivered by the Wiegand element (9).

**3.** Position encoder according to any one of preceding claims, **characterized in that** the at least two magnetosensitive sensor elements (7, 8) serving for fine resolution of the segments comprise a spacing perpendicularly to the direction of motion.

**4.** Position encoder according to any one of claims 1 to 3, **characterized by** a four-quadrant Hall probe in which each pair of oppositely connected magnetic field-sensitive surfaces (7a, 7b; 8a, 8b) comprises a spacing, wherein the spacing of the one pair (7a, 7b) in the direction of motion is equal to zero, and wherein the spacing of the other pair (8a, 8b) perpendicularly to the direction of motion is equal to zero.

**5.** Position encoder according to any one of claims 1 to 4, **characterized in that** the magnetic pole pairs formed by two associated different magnetic poles respectively extend parallel to the direction of motion.

**6.** Position encoder according to any one of claims 1 to 4, **characterized in that** the magnetic pole pairs formed by two associated different magnetic poles respectively extend perpendicular to the direction of motion.

**7.** Position encoder according to any one of claims 1 to 6, **characterized in that** the Wiegand element (9) extends in the direction of the pairs of magnetic poles.

**8.** Position encoder according to any one of claims 1 to 7, **characterized in that** each of the pairs of magnetic poles is implemented by a diametrally magnetized, disk-shaped permanent magnet (5).

9. Position encoder according to any one of claims 1 to 7, **characterized in that** each of the pairs of magnetic poles is implemented by an axially magnetized barshaped permanent magnet (5).

## Revendications

1. Indicateur de position magnétique absolu pour la mesure de mouvements linéaires ou rotatifs d'un corps, dans lequel l'indicateur de position comprend ce qui suit :

    - un support magnétique (2), qui est relié solidement au corps et présente plusieurs paires de pôles magnétiques, formées par des aimants permanents (5), qui sont agencées dans la direction du mouvement et dont les pôles nord et sud se succédant alternativement forment des segments magnétiques, par le comptage et la résolution desquels la position du corps est déterminée,
    - un ensemble d'éléments de capteur fixe (6), qui pour la résolution fine des segments magnétiques et pour la détection de la direction du mouvement du support magnétique (2) comprend au moins deux éléments de capteur magnéto-sensibles (7, 8), qui utilisent différentes plages de champ magnétique et dont au moins un peut être alimenté au moins temporairement avec un faible courant minimum,
    - un élément Wiegand (9) agencé fixement, qui est déclenché au moins par une paire de pôles magnétiques sur deux pour l'émission d'une impulsion électrique,
    - un ensemble électronique (12), qui comprend un circuit logique de commande et de gestion d'énergie (20), et une unité de comptage (29) avec une mémoire non volatile et qui additionne des impulsions électriques de l'élément Wiegand (9) en tenant compte d'un signal fourni par l'ensemble d'éléments de capteur (6), caractérisant la direction du mouvement du support magnétique (2) en une valeur de comptage stockée dans la mémoire non volatile ou les soustrait de celle-ci, et
    - un circuit logique (26), qui échange des données avec l'ensemble électronique (12) et calcule la position absolue momentanée du corps à partir de la valeur de comptage obtenue en tenant compte des signaux fournis par l'ensemble d'éléments de capteur (6),
    - dans lequel une partie importante de l'énergie électrique, qui est contenue dans les impulsions émises par l'élément Wiegand (9), sert, au moins dans des périodes de temps dans lesquelles il manque une alimentation électrique externe, à l'alimentation électrique de l'ensemble électronique (12) et à l'alimentation d'au moins un capteur magnéto-sensible (7, 8, 17) avec un faible courant minimum de sorte que les impulsions de l'élément Wiegand (9) puissent également être comptées et traitées dans cet état de fonctionnement,
**caractérisé en ce que**
    - la distance dans la direction du mouvement entre au moins deux des éléments de capteur magnéto-sensibles (7, 8) servant à la résolution fine des segments est pratiquement nulle.

2. Indicateur de position selon la revendication 1, **caractérisé en ce que** l'ensemble électronique (12) comprend un accumulateur d'énergie (24) avec unité de charge, qui peut être chargée par les impulsions émises par l'élément Wiegand (9).

3. Indicateur de position selon l'une quelconque des revendications précédentes, **caractérisé en ce qu'**au moins deux éléments de capteur magnéto-sensibles (7, 8) servant à la résolution fine des segments présentent une distance perpendiculairement à la direction du mouvement.

4. Indicateur de position selon l'une quelconque des revendications 1 à 3, **caractérisé par** une sonde de Hall 4 quadrants, dans laquelle chaque paire de surfaces sensibles au champ magnétique (7a, 7b ; 8a, 8b) commutées l'une contre l'autre présente une distance, dans lequel la distance de l'une paire (7a, 7b) dans la direction du mouvement est nulle, et dans lequel la distance de l'autre paire (8a, 8b) perpendiculairement à la direction du mouvement est nulle.

5. Indicateur de position selon l'une quelconque des revendications 1 à 4, **caractérisé en ce que** respectivement les paires de pôles magnétiques formées par deux pôles magnétiques différents correspondants s'étendent parallèlement à la direction du mouvement.

6. Indicateur de position selon l'une quelconque des revendications 1 à 4, **caractérisé en ce que** respectivement les paires de pôles magnétiques formées par deux pôles magnétiques différents correspondants s'étendent perpendiculairement à la direction du mouvement.

7. Indicateur de position selon l'une quelconque des revendications 1 à 6, **caractérisé en ce que** l'élément Wiegand (9) s'étend en direction des paires de pôles magnétiques.

8. Indicateur de position selon l'une quelconque des revendications 1 à 7, **caractérisé en ce que** chacune des paires de pôles magnétiques est réalisée par un aimant permanent (5) en forme de disque magnétisé diamétralement.

9. Indicateur de position selon l'une quelconque des revendications 1 à 7, **caractérisé en ce que** chacune des paires de pôles magnétiques est réalisée par un aimant permanent (5) en forme de barre magnétisé axialement.

*Fig. 1*

*Fig. 2*

*Fig. 3*

Fig. 4

Fig. 5

**Fig. 6**

**Fig. 7**

*Fig. 8*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008051479
- EP 0658745 A2
- DE 10259223 A1
- DE 102004062448 A1
- EP 1770001 A2
- DE 102006017865 A1
- EP 1847810 A1